# EUROPEAN PATENT SPECIFICATION

(11) **EP 3 593 693 B1**
(45) Date of publication and mention of the grant of the patent: **02.06.2021**
(21) Application number: 19185961.0
(22) Date of filing: 12.07.2019
(51) Int. Cl.: A47L 13/16

(54) **CLEANING ARTICLE COMPRISING MULTIPLE SHEETS AND METHODS THEREOF**
REINIGUNGSARTIKEL MIT MEHREREN BLÄTTERN UND VERFAHREN DAFÜR
ARTICLE DE NETTOYAGE COMPRENANT DE MULTIPLES FEUILLES ET PROCÉDÉS ASSOCIÉS

(30) Priority: 13.07.2018 US 201862697414 P
(43) Date of publication of application: 15.01.2020
(73) Proprietor: The Procter & Gamble Company, Cincinnati, OH 45202 (US)
(72) Inventor: BRADBURY, Glenn Allen, Cincinnati, Ohio 45202 (US); WINTER, Clint Stephen, Buffalo, New York 14215 (US)
(74) Representative: P&G Patent Belgium UK

(56) References cited:
- US-A- 4 437 271
- US-A1- 2005 136 238
- US-A1- 2006 000 043

## Description

### TECHNICAL FIELD

The present disclosure relates to cleaning articles based on melamine-formaldehyde foams and methods thereof, and more particularly to cleaning articles that include multiple sheets having melamine-formaldehyde foam that are removably attached to the cleaning article. The present disclosure further relates to methods for cleaning hard surfaces using such cleaning articles.

### BACKGROUND OF THE INVENTION

Consumers are continually expressing the desire for cleaning products that are capable of effectively cleaning and removing soils and/or stains from hard surfaces while being easy to handle and are easy to store. Cleaning articles of cut or molded pieces of melamine-formaldehyde foam have become popular to remove soils and/or stains from hard surfaces such as tiles, walls, floors, sanitary fittings such as sinks, showers, shower curtains, wash basins, household appliances including, but not limited to, refrigerators, freezers, washing machines, automatic dryers, ovens, microwave ovens, dishwashers and so on. An example of such cut or molded pieces of melamine-formaldehyde foam may include but are not limited to those sold under the tradename MR. CLEAN MAGIC ERASER® manufactured and sold by The Procter & Gamble Company, Cincinnati, Ohio, USA.

It is common for manufacturers to produce such cut or molded pieces of melamine-formaldehyde foam in thick blocks having a length and width appropriate for single-handed usage and a thickness of approximately 0.5 to 2 inches (about 12.7 to about 51 mm). When wetted with an appropriate solvent, such as tap water, such cut or molded pieces of melamine-formaldehyde foam readily remove soils and/or stains from hard surfaces when melamine-formaldehyde foam is brought into contact with the hard surface. By "bringing into contact" it is meant wiping, swiping, rubbing or the like. However, such thick blocks of melamine-formaldehyde foam may tend to retain the removed soils and/or stains on the surface of the foam and are thereafter difficult to clean and reuse, leaving consumers feeling as though they are not obtaining as much use out of the product as the product is capable of. Further, thick blocks of melamine-formaldehyde foam may tend to be difficult for consumers to manipulate and fit into tight spaces and adequately contact surfaces having an irregular shape. Thus, there remains a need to balance the cleaning benefits associated with melamine-formaldehyde foams with the negatives observed when the foam is too thick.

A potential solution to this problem is producing thinner sheet-like cut or molded pieces of melamine-formaldehyde foam. Such thinner pieces may likely be easier to manipulate and fit into tight spaces and adequately contact surfaces having an irregular shape as well as being readily disposable so as to not consumers not feeling as though they have wasted product unnecessarily. However, such thinner pieces may readily become loose and be difficult to store. If loose and not properly stored, such thinner pieces may be more easily lost within the household and may also be more easily dirtied, torn, and/or crumpled by surrounding objects.

A potential solution to this problem may be binding a stack of the thinner sheet-like cut or molded pieces of melamine-formaldehyde foam. Generally known methods of binding used for substrates such as wet laid cellulosic paper substrates include, for example, sewing the stack, placing the stack as loose leaves within a binder, using a spiral binder, using clamps, using adhesive, and the like. However, certain methods of binding may be problematic for consumers particularly when a consumer attempts to remove one of the pieces of melamine-formaldehyde foam from the stack in that by pulling one of the pieces from the stack, the piece may tear, resulting in wasted product as well as undesirable appearance of the resulting pulled piece A cleaning article according to the preamble of claim 1 is already known e.g. from US-A-20060000043.

In view of the above, there is a continuing unaddressed need for a product and a method of using such product that balances the cleaning benefits associated with thinner sheet-like pieces of melamine-formaldehyde foam with the negatives observed when the pieces are loose or are bound in such a manner that pulling a piece out of a stack may result in tearing of the piece.

### SUMMARY OF THE INVENTION

The present invention relates to a cleaning article. The cleaning article may comprise at least two sheets. Each of the at least two sheets may a first layer, the first layer comprising a melamine-formaldehyde foam. Each of the at least two sheets may comprise at least five sheet sides, each of the at least five sheet sides having a length and a width, wherein at least one of the at least five sheet sides is a sheet attachment side. The cleaning article may further comprise an adhesive. The adhesive may be in contact with the sheet attachment side of each of the at least two sheets such that each of the at least two sheets is removably attached to the cleaning article by the adhesive. The adhesive is discontinuous along the length of the sheet attachment side of each of the at least two sheets.

The present disclosure further relates to a method of cleaning a hard surface that comprises the step of: a) providing a cleaning article. The cleaning article may comprise at least two sheets. Each of the at least two sheets may a first layer, the first layer comprising a melamine-formaldehyde foam. Each of the at least two sheets may comprise at least five sheet sides, each of the at least five sheet sides having a length and a width, wherein at least one of the at least five sheet sides is a sheet attachment side. The cleaning article may further comprise an adhesive. The adhesive may be in contact with the sheet attachment side of each of the at least two sheets such that each of the at least two sheets is removably attached to the cleaning article by the adhesive. The adhesive is discontinuous along the length of the sheet attachment side of each of the at least two sheets. The method may further comprise the steps of b) removing one of the at least two sheets from the cleaning article; and c) bringing the sheet removed in step b) into contact with the hard surface.

### BRIEF DESCRIPTION OF THE DRAWINGS:

FIG. 1 is a perspective view of a cleaning article having a sheet.
FIG. 2 is a perspective view of a cleaning article having multiple sheets.

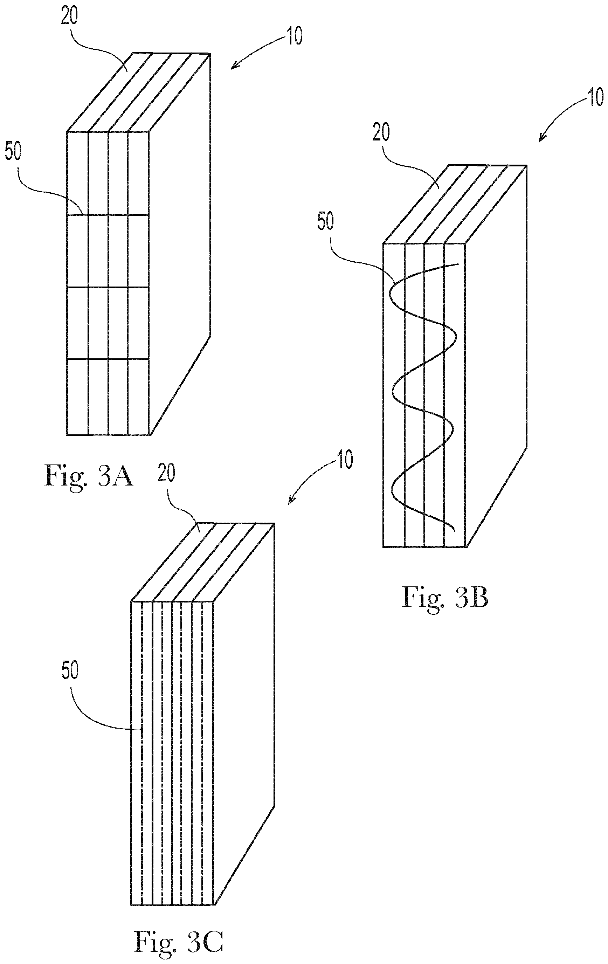

FIG. 3A is a perspective view of a cleaning article having multiple sheets and adhesive.
FIG. 3B is a perspective view of a cleaning article having multiple sheets and adhesive.
FIG. 3C is a perspective view of a cleaning article having multiple sheets and adhesive.

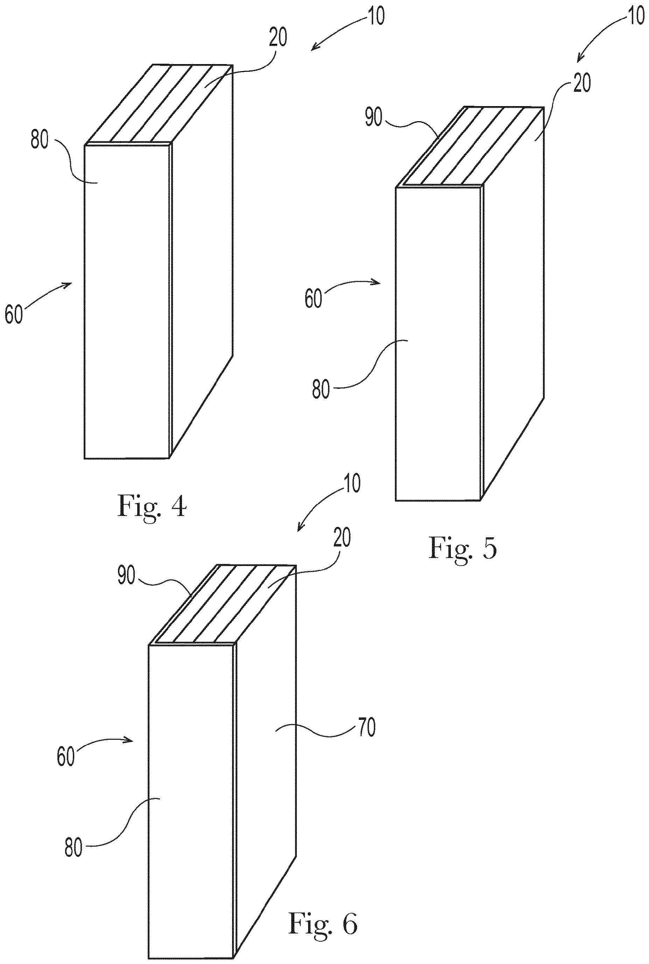

FIG. 4 is a perspective view of a cleaning article having a cover.
FIG. 5 is a perspective view of a cleaning article having a cover.
FIG. 6 is a perspective view of a cleaning article having a cover.

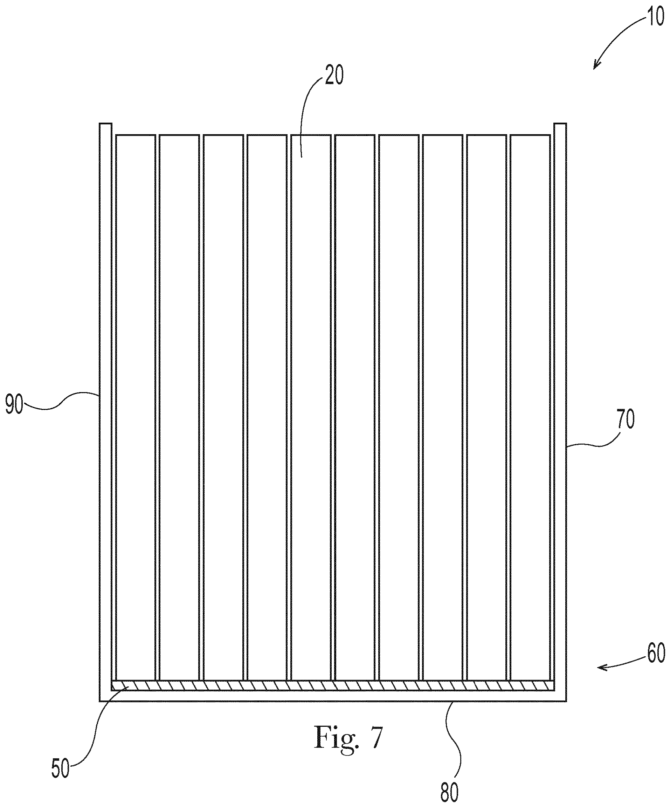

FIG. 7 is a side view of a cleaning article having a cover.

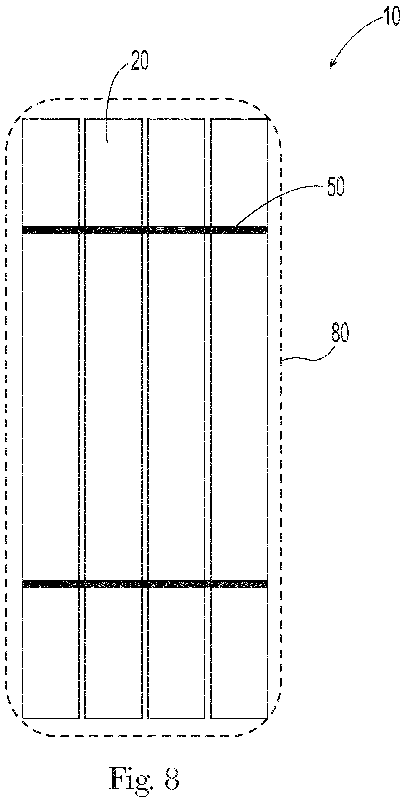

FIG. 8 is a cross-sectional view of a cleaning article having a cover.

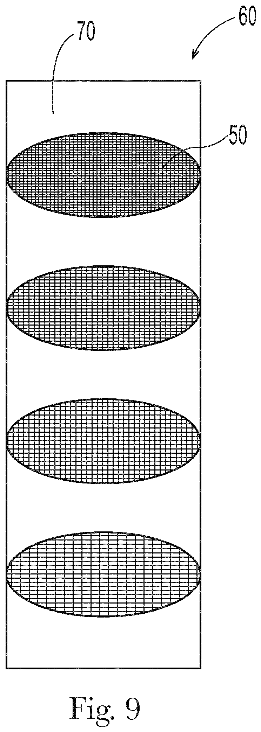

FIG. 9 is a side view of a cleaning article having a cover and adhesive.

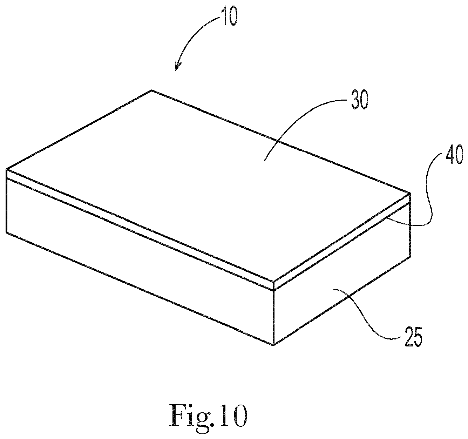

FIG. 10 is a perspective view of a cleaning article having a second layer.
FIG. 11 is a perspective view of a cleaning article having multiple sheets and an illustration of a user removing a sheet from the cleaning article.

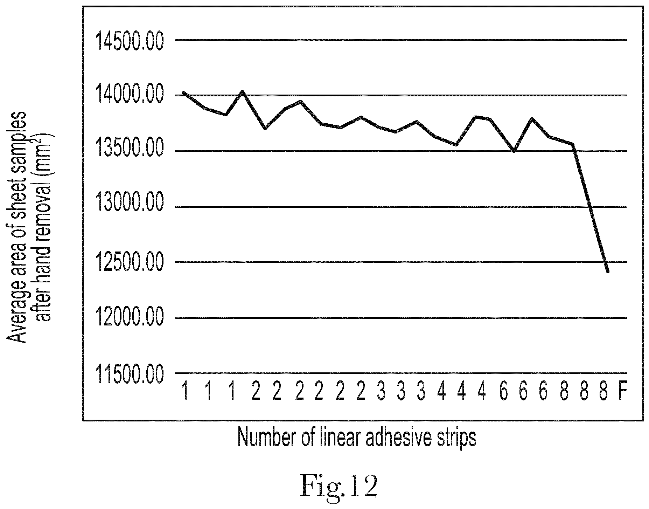

FIG. 12 is a graphical representation of the average area of sheet samples after hand removal (mm²) per cleaning articles having varying amounts of adhesive.

### DETAILED DESCRIPTION OF THE INVENTION

It has been now found that above objectives can be met by use of cleaning articles of the present disclosure and methods of cleaning hard surfaces using the cleaning articles of the present disclosure. The cleaning articles of the present disclosure may comprise at least two sheets. Each of the at least two sheets may comprise a first layer comprising a melamine-formaldehyde foam. Each of the at least two sheets may comprise at least five sheet sides, each of the at least five sheet sides having a length and a width. At least one of the five sheet sides may be a sheet attachment side. The cleaning article may further comprise an adhesive. The adhesive may be in contact with the sheet attachment side of each of the at least two sheets such that each of the at least two sheets is removably attached to the cleaning article by the adhesive. The adhesive may be discontinuous along the length of the sheet attachment side of each of the at least two sheets.

The sheets are of a certain size and shape, as will be described hereinafter. It is believed that by having multiple sheets wherein each sheet is removably attached to a cleaning article by an adhesive, that the sheets and thus the cleaning article may be less likely to be lost within the household and less likely to be easily dirtied, torn, and/or crumpled by surrounding objects. This benefit may be even further amplified when the cleaning article comprises a cover, the cover further protecting the sheets from contact with outside forces and materials that may dirty, tear, crumple, or otherwise affect the sheets. The cover may also provide further structural reinforcement of the cleaning article.

The cleaning articles, processes and uses according to the present disclosure will now be described.

### Cleaning Article

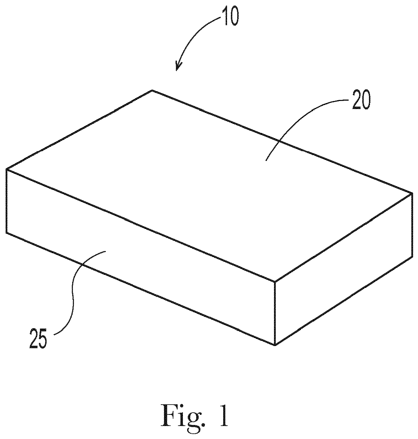

FIG. 1 shows a cleaning article 10. The cleaning article 10 herein is based on melamine-formaldehyde foam and includes at least two sheets 20. Each sheet 20 may comprise a first layer 25 comprising a melamine-formaldehyde foam. By a "cleaning article" it is meant herein an article of manufacture of any suitable shape and/or size and/or volume suitable for cleaning, i.e., at least partially removing spots and/or stains from hard surfaces. Preferably, the cleaning article herein is in a shape and/or size and/or volume suitable for use by a consumer to clean hard surfaces therewith.

The sheets 20 of melamine-formaldehyde foam may be heat-compressed. By "heat-compressed", it is meant that the melamine-formaldehyde foam has been subject to two operations: a heating step and a compression step, which may be performed simultaneously, as described in further detail herein.

The cleaning articles 10 herein may be suitable for cleaning/cleansing inanimate surfaces selected from the group consisting of household hard surfaces; dish surfaces; surfaces such as leather or synthetic leather; and automotive vehicles surfaces. Preferably, the cleaning articles 10 herein are suitable to clean household hard surfaces. By "household hard surface", it is meant any kind of surface typically found in and around houses like kitchens, bathrooms, *e.g.,* floors, walls, tiles, windows, cupboards, sinks, showers, shower plastified curtains, wash basins, fixtures and fittings and the like made of different materials like ceramic, vinyl, no-wax vinyl, linoleum, melamine, glass, INOX®, FORMICA®, any plastics, plastified wood, metal or any painted or varnished or sealed surface and the like. Household hard surfaces may also include household appliances including, but not limited to refrigerators, freezers, washing machines, automatic dryers, ovens, microwave ovens, dishwashers and so on. Such hard surfaces may be found both in private households as well as in commercial, institutional and industrial environments.

The sheets 20 may be of a three-dimensional shape defined by at least five faces. Each face may have a length and a width. Each face may have a surface and a corresponding surface area. Each face may be planar, substantially planar, or non-planar throughout the length and width of the face. Non-limiting examples of non-planar faces are wavy faces and curved faces.

Suitable shapes of the sheets 20 may be selected from the group consisting of: cube shape, rectangular shape, pyramid shape, cylindrical shape, cone shape, pencil eraser shape, cuboid shape, tetrahedron shape; sphere shape; globular shape; and ellipsoid shape. Preferably, the cleaning article 10 has a shape selected from the group consisting of: cuboid shape, cube shape, rectangular shape, and pencil eraser shape.

In a non-limiting example, the sheets 20 may have a cuboid shape having three groups of parallel and equal length and width faces, referred to as a, b, and c, wherein a ranges from about 20 mm to about 200 mm, preferably from about 60 mm to about 130 mm; b ranges from about 20 mm to about 200 mm, preferably from about 120 mm to about 180 mm; and c ranges from about 0.05 mm to about 60 mm, preferably from about 1 mm to about 40 mm.

In a non-limiting example, the sheets 20 may have a pencil eraser shape. By "shape of a pencil eraser" it is meant herein a voluminous body having six faces, wherein three pairs of parallel and equally shaped and sized faces exist and wherein one pair of faces are in the shape of a parallelogram and the remaining two pairs of faces are of rectangular shape. When the sheets 20 are of the shape of a pencil eraser, the line 40 indicating the separation between the first layer 25 of melamine-formaldehyde foam and second layer 30 (or the surface areas where the two layers are joined together) of the sheet 20 is preferably substantially parallel (preferably parallel) to the side of sheet 20 having the largest surface area.

The sheets 20 may each have a volume of from about 1 cm³ to about 2,500 cm³, preferably from about 10 cm³ to about 1,000 cm³, more preferably from about 10 cm³ to about 100 cm³.

The cleaning article 10 of the present disclosure as shown in Fig. XX may comprise multiple sheets 20. The cleaning article 10 may comprise at least two sheets 20. The cleaning article 10 may comprise at least three sheets 20, at least five sheets 20, at least seven sheets 20, at least ten sheets 20, at least fifteen sheets 20, at least twenty sheets 20, or any number therebetween. It is envisioned that the cleaning article 10 may comprise any number of sheets 20 that can be included within the cleaning article 10 for eventual sale to a consumer.

The sheets of melamine-formaldehyde foam 20 and second layer 30 may be arranged in said cleaning article in any way suitable. In a preferred embodiment according to the present invention the sheets of melamine-formaldehyde foam 20 and second layer 30 are arranged parallel to at least one side, preferably two opposite sides, of the cleaning article. However, the cleaning article may also have an irregular shape. Indeed, the thickness of the layers may be constant or vary throughout the cleaning article. The separation line 40 between the sheets of melamine-formaldehyde foam 20 and second layer 30 may form a straight line or may form a bend or be completely irregular. In addition, the separation plane of the layers may be in the center of cleaning article, dividing the article in two equal parts, or may be in the upper or lower part of the article. In addition, the cleaning article may be in the shape of a sphere or a globule or an ellipsoid with the separation plane between the sheets of melamine-formaldehyde foam 20 and second layer 30 forming a spherical segment or one of the layers, preferably the layer of a second layer here, forming a sphere in a sphere (similar to the layers of an onion).

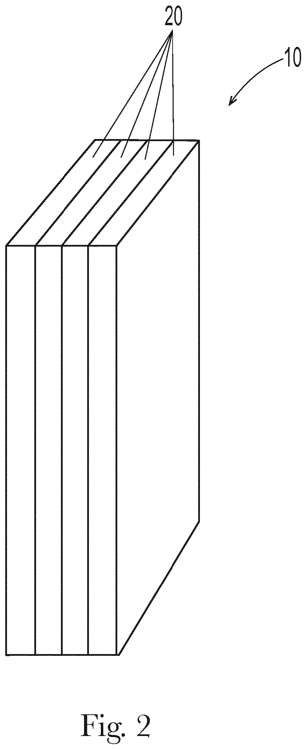

In this highly preferred embodiment of the present invention, wherein the cleaning article 10 herein has a cuboid shape, the line indicating the separation 40 between the sheets of melamine-formaldehyde foam 20 and second layer 30 (or the surface areas where the two are joined together) of the article is preferably substantially parallel (preferably parallel) to the side of the cuboid shaped article having the largest surface area (as shown in Fig. 2).

In this preferred embodiment, wherein the cleaning article herein has the shape of a pencil eraser, the line indicating the separation between the sheets of melamine-formaldehyde foam 20 and second layer 30 (or the surface areas where the two layers are joined together) of the article is preferably substantially parallel (preferably parallel) to the side of article in the shape of a pencil eraser having the largest surface area.

In order to obtain suitable cleaning articles according to a preferred embodiment of the present invention, the sheets of the melamine-formaldehyde foam layer 20 and the second layer 30 have to be attached to each other. This attachment can be achieved by any attachment means suitable for joining the two layers. The attachment may be either a permanent attachment (wherein the two layers cannot be separated without inflicting substantial damage to the layers) or temporary attachment (wherein the two layers may be separated without inflicting substantial damage to the layers). Suitable attachment means providing a permanent attachment are selected from the group consisting of: foam flame laminating the two layers together; use of a permanent adhesive; sewing the two layers together; and needle-punching the two layers together; and combinations thereof. Suitable attachment means providing a temporary attachment are selected from the group consisting of: a weak adhesive; Velcro; and a water-based, water-soluble coating or adhesive; and combinations thereof. In a preferred embodiment here, the attachment of layers herein is a permanent attachment.

Foam flame lamination is a continuous process that can adhere foams and additional materials, if any, to one or both sides of foam in a single pass. The process of flame lamination involves the passing of first foam (either the melamine-formaldehyde foam comprising linear polymer herein or the second foam herein) over an open flame, which creates a thin layer of molten foam / polymer. Second foam (either the second foam herein or the melamine-formaldehyde foam comprising linear polymer herein, depending on the first step) is pressed against the first foam while it is still in the molten state. Foams and additional material, if any, can be adhered to one or both sides of the foam in a single pass. Furthermore, additional passes are optional. The strength of the bond depends upon the foams and additional material, if any, selected and the processing conditions (i.e., gas type, flame height and spread, foam burn-off and nip pressure). In a non-limiting example, each of the at least two sheets may comprise a second layer 30, wherein the second layer 30 is a foam layer made of a second foam material as discussed herein.

The second layer 30, if present, may be of the same or similar materials as the sheets of melamine-formaldehyde foam or said second layer may be made of another material as known in the art. Indeed, the cleaning article herein may be in a so-called sandwich configuration, wherein three layers are present. In a preferred embodiment, wherein the cleaning article herein is in a sandwich configuration, the middle layer may be said second layer and at least one of the two outer layers are sheets of melamine-formaldehyde foam with the second outer layer being either sheets of melamine-formaldehyde foam or another material providing another feature, such as abrasiveness or increased rigidity. In a highly preferred embodiment according to the present invention the cleaning article herein comprises two outer layers of said sheets of melamine-formaldehyde foam and an inner layer, preferably of a second material to provide rigidity, as discussed herein below.

The sheets 20 and layers 25, 30 of the cleaning article 10 according to the present disclosure may cover or obscure, each other either partially or fully. By a "partial coverage" or "partially obscure" it is meant that at least one of the sheets 20 or layers 25, 30 overlaps the other sheets 20 or layers 25, 30 and is not fully covered by the other sheets 20 or layers 25, 30. By a "full coverage" it is meant that the sheets 20 or layers 25, 30 of the cleaning article 10 do fully cover each other and that none of the sheets 20 or layers 25, 30 substantially overlap the other sheets 20 or layers 25, 30.

The ratio of the first layer 25 of melamine-formaldehyde foam to the second layer 30 in the cleaning article 10 may be from about 20:1 to about 1:20 by volume, more preferably from about 10:1 to about 1:10 by volume, even more preferably from about 5:1 to about 1:1, still more preferably from about 5:1 to about 2:1, and most preferably from about 4:1 to about 3:1 by volume.

In a non-limiting example, the cleaning article 10 only comprises the sheets 20 of melamine-formaldehyde foam and does not comprise a second layer 30.

In order to obtain suitable cleaning articles 10, sheets 20 of melamine-formaldehyde foam and a second layer 30, if present, according to the present disclosure, raw materials may have to be modified in shape and/or size. This modification can be done by any means known to those skilled in the art. Suitable means of modifying the shape and/or size of melamine foam- and second foam-raw materials may be selected from the group consisting of: cutting, breaking, and tearing, and combinations thereof.

### Melamine-Formaldehyde Foam

Melamine-formaldehyde foams, the production of melamine-formaldehyde foams, and linear polymers are generally known to a person skilled in the art.

The melamine-formaldehyde foam of the present invention may comprise at least one linear polymer. The at least one linear polymer may have an average number molecular weight Mₙ in the range from about 1000 to about 8000 g/mol. Preferably, the linear polymer may have a number average molecular weight Mₙ in the range from about 3000 to about 5000 g/mol. The number average molecular weight Mₙ can be calculated from the OH number according to DIN 53240. Preferably from about 0.1 to about 5 parts by weight, more preferably from about 0.3 to about 2 parts of the at least one linear polymer is used per 100 parts of melamine-formaldehyde precondensate. The linear polymer may be hydrophilic. The linear polymer may have a water solubility of greater than about 5 % per weight, more preferably greater than about 10 % per weight. Preferably, the linear polymer may comprise at least a terminal hydroxyl group. Preferably, the linear polymer may comprise the elements carbon, hydrogen and oxygen. Most preferably, polyethylene glycol is used as the linear polymer.

The sheets of melamine-formaldehyde foam of the present invention are preferably obtainable by the consecutive process comprising the steps a) and b):
a) heating to foam up and crosslink a mixture comprising a melamine-formaldehyde precondensate having a molar ratio of melamine:formaldehyde in the range of typically from about 1:1.3 to about 1:5, preferably from about 1:2.5 to about 1:3.5, at least one linear polymer, a curative, a dispersant and a blowing agent; and
b) drying the foam obtained in process step a.

The process steps a) an b) as well as the melamine-formaldehyde precondensates, curatives, dispersants, and blowing agents useful in step a) are generally known in principle to a person skilled in the art and are described in the literature.

In addition to melamine and formaldehyde, the melamine-formaldehyde precondensate in addition to melamine and formaldehyde may comprise up to about 50%, preferably up to about 20% by weight (all based on the weight of cocondensed melamine) of other thermoset-formers and up to about 50%, preferably up to about 20% by weight (all based on the weight of cocondensed formaldehyde) of other aldehydes in cocondensed form. Useful thermoset-formers may include for example: alkyl- and aryl-alkyl-substituted melamine, urea, urethanes, carboxamides, dicyandiamide, guanidine, sulfurylamide, sulfonamides, aliphatic amines, glycols, phenol and its derivatives. Examples of other aldehydes may include acetaldehyde, trimethylolacetaldehyde, acrolein, benzaldehyde, furfurol, glyoxal, gluteraldehyde, phthalaldehyde and terephthalaldehyde. Particular preference is given to an unmodified melamine-formaldehyde precondensate, *i.e.,* a melamine-formaldehyde precondensate devoid of any other thermoset-formers or other aldehydes.

For the processes of the present disclosure, it is advantageous that step a) utilizes a precondensate which is free of the sulfite groups.

Emulsification of the blowing agent and stabilization of the foam in step a) generally requires the addition of a dispersant, *e.g.,* an emulsifier or emulsifier mixture. Useful emulsifiers may include but are not limited to anionic surfactants, cationic surfactants, nonionic surfactants, and mixtures thereof.

Suitable anionic surfactants may include but are not limited to diphenylene oxide sulfonates, alkane- and alkylbenzenesulfonates, alkylnaphthalenesulfonates, olefinsulfonates, alkyl ether sulfonates, fatty alcohol sulfates, ether sulfates, alpha-sulfo fatty acid esters, acylaminoalkanesulfonates, acyl isethionates, alkyl ether carboxylates, N-acylsarcosinates, alkyl and alkyl ether phosphates. Useful nonionic surfactants may include but are not limited to alkylphenol polyglycol ethers, fatty alcohol polyglycol ethers, fatty acid polyglycol ethers, fatty acid alkanolamides, EO-PO block copolymers, amine oxides, glycerol fatty acid esters, sorbitan esters and alkylpolyglucosides. Useful cationic emulsifiers may include but are not limited to alkyltriammonium salts, alkylbenzyldimethylammonium salts and alkylpyridinium salts. The emulsifiers are preferably added in amounts of 0.2% to 5% by weight, based on the melamine-formaldehyde precondensate.

For the melamine-formaldehyde precondensate, which is preferably used in the form of an aqueous solution or dispersion, to produce foam in step a), a blowing agent may be used, the amount depending on the desired density of the foam. In principle, the process of the present disclosure can utilize both physical blowing agents and chemical blowing agents. Useful physical blowing agents may include but are not limited to hydrocarbons, halogenated and more particularly fluorinated hydrocarbons, alcohols, ethers, ketones and esters in liquid form or air and CO₂ as gases. Useful chemical blowing agents may include but are not limited to isocyanates mixed with water, in which case CO₂ is released as an effective blowing agent, moreover carbonates and bicarbonates mixed with acids, which likewise produce CO₂, and also azo compounds, such as azodicarbonamide. In a non-limiting example, the aqueous solution or dispersion of the melamine-formaldehyde precondensate is admixed with from about 1% to about 40% by weight, based on the melamine-formaldehyde precondensate, of a physical blowing agent having a boiling point of from 0 to about 80°C.

Curatives used in step a) may comprise acidic compounds catalyzing the continued condensation of the melamine-formaldehyde precondensate. The amount used may be from about 0.01% to about 20%, preferably from about 0.05% to about 5% by weight, based on the melamine-formaldehyde precondensate. Organic and inorganic acids can be used, examples including but not limited to hydrochloric acid, sulfuric acid, phosphoric acid, nitric acid, formic acid, acetic acid, oxalic acid, toluenesulfonic acids, amidosulfonic acids and also acid anhydrides.

The aqueous solution or dispersion of the melamine-formaldehyde precondensate used in step a) is preferably free of further added substances. However, it can be beneficial for some purposes to add up to about 20% by weight, and preferably less than aobut 10% by weight, based on the melamine-formaldehyde precondensate, of customary added substances, such as dyes, flame retardants, UV stabilizers, agents to lower combustion gas toxicity or to promote carbonization. Since the foams are generally open celled and capable of imbibing water, some applications make it necessary to add hydrophobicizers in amounts of 0.2% to 5% by weight. Useful hydrophobicizers may include for example silicones, paraffins, silicone surfactants, fluorosurfactants, hydrophobic hydrocarbonaceous surfactants, silicone emulsions and fluorocarbon emulsions.

The concentration of the melamine-formaldehyde precondensate in the mixture of precondensate and solvent/dispersant, more particularly water, can vary within wide limits from about 55% to about 85% by weight and preferably from about 63% to about 80% by weight, all based on the total weight of melamine-formaldehyde precondensate and solvent/dispersant. The preferred viscosity of the mixture of precondensate and solvent/dispersant may be from about 1 to about 3000 dPa.s, preferably from about 5 to about 2000 dPa.s.

Further mixture components may be mixed with the aqueous solution or dispersion of the melamine-formaldehyde precondensate to form a homogeneous mixture, with the blowing agent being forced in under pressure if necessary. However, it is also possible to start with a solid, for example spray-dried, melamine-formaldehyde precondensate and to subsequently mix it with a dispersion of the linear polymer and/or with an aqueous solution of the emulsifier, with the curative and also with the blowing agent. After mixing, the heated resin mixture with the dispersed blowing agent is discharged through a die and foams up thereafter.

Foaming of the blowing agent-containing solution or dispersion upon emergence from the die is augmented, as described in EP-B 17671, by means of hot air or high frequency irradiation. Preferably, the energy can be input by electromagnetic radiation, for example by high frequency irradiation with from about 5 to about 400 kW, preferably from about 5 to about 200 kW, more preferably from about 9 to about 120 kW per one kilogram of the mixture used in a frequency range of from about 0.2 to about 100 GHz, preferably from about 0.5 to about 10 GHz. Magnetrons are a suitable source of radiation for dielectric radiation, with one or more magnetrons being able to be irradiated at the same time.

The mixture to be foamed may be irradiated immediately on emerging from the foaming die. The blowing agent evaporates the resin mixture foams up and at the same time cures through.

The foams produced are finally dried to remove water and blowing agent remaining in the foam.

In a further non-limiting example of the process according to the present disclosure, process step b) may be followed by a process step c) in which the dried foam is cut into two, five, ten, twenty, fifty, a hundred or even two-hundred sheets. In one non-limiting example, process step c) further includes cutting the dried foam to leave at least a portion of the foam uncut along at least a portion and, preferably along all, of one edge of the foam.

In a further non-limiting example of the process according to the present invention, process c) may be followed by process d) in which the multiple sheets are press molded to make them elastic.

Process step d) is known in principle to a person skilled in the art and is described in the literature, for example in EP-A 1 505 105 and EP-B 37470.

The foam blocks or sheets obtained can optionally be thermocompressed in a further process step. Thermocompression as such is known to a person skilled in the art and described for example in WO 2007/031944, EP-A 451 535, EP-A 111 860 and US-B 6,608,118.

In general, the melamine-formaldehyde foams according to the present invention have a density of from about 10 to about 100 kg/m³, preferably from about 12 to about 50 kg/m³, more preferably from about 18 to about 36 kg/m³.

### Adhesive

The sheets 20 are removably attached to the cleaning article 10 by an adhesive 50. This removably attachment can be achieved by any attachment means suitable for joining the at least two sheets 20 of melamine-formaldehyde foam.

The adhesive may be selected from the group consisting of tacky polymers, waxes, hotmelt adhesives, pressure sensitive adhesives and combinations thereof.

Completely formulated hot melts as well as single components used in hot melt mixtures can be effective. Single components used in hot melt mixtures may include, for example, example tacky adhesive polymers selected from the group consisting of: polyisobutylene polymers, alkyl methacrylate polymers, polyalkyl acrylates, and mixtures thereof, wherein the alkyl groups are C₂-C₁₈, preferably C₂-C₁₂. Preferred tacky polymers are poly n-decyl methacrylate, poly ethyl acrylate, poly n-butyl acrylate, and mixtures thereof. More preferred tacky polymers herein are polyisobutylene polymers.

Examples of preferred hot melt adhesives for use herein include, but are not limited to, a series of adhesives commercially available from H.B. Fuller Company under the trade names HL-1496, HM-1597, HM-1902, HM-1972, HM-2713, HM-1962, HL-2198, HL-1500, HL-2201 and the like; hot melts available from National Starch under trade names Soft Gel 7SC, Easymelt ® 34-5640, Uni-flex® 34-1211, Durotak® 34-446B and the like; and hot melts available from Bostik Findley under tradenames Thermogrip® H9683 C2X, H2355-01, H9389, H20192, H2885 and the like.

Preferred waxes fall under the classification of waxes called micro-crystalline which is a petroleum based wax. Petroleum based waxes typically range in chain length from C₁₀H₂₂ to C₅₀H₁₀₂ based on the generic formula CₙH₂ₙ₊₂. Petroleum based waxes can be classified as paraffins (also called macro-crystalline) and micro-crystalline waxes. Paraffins are typically obtained by de-oiling slack/scale wax, which is derived by de-waxing base distillate lube oil streams. These streams are primarily straight chain alkanes. Paraffins after processing have low affinity for oil. This low affinity for oil renders the paraffin brittle and provides them with a low melting point. Micro-crystalline waxes are also petroleum based, but unlike paraffins, micro-crystalline waxes contain branched and cyclic saturated hydrocarbons. Unlike paraffin waxes, oil is held tightly by micro-crystalline waxes, and consequently does not migrate to the outer surface of the wax. The affinity for tightly holding oil renders micro-crystalline waxes "softer" and more tacky than paraffins and other waxes.

Water or solvent based adhesives can also be suitable as an adhesive. These can include acrylic based adhesives (*e.g.*, isoctyl acrylate/acrylic acid copolymers, styrene/acrylic polymers and tackified acrylate copolymers; tackified rubber-based adhesives (*e.g.*, tackified styreneisoprene-styrene block copolymers; nitrile rubbers (*e.g.,* acrylonitrile-butadiene); silicone based adhesives (*e.g.,* polysiloxanes) and polyurethanes. Acrylics are particularly preferred because they can easily be dissolved in water or mixed with other chemistries to form an aqueous emulsion. Adhesives of this type are copolymers formed from monomer mixtures which include at least one of acrylic acid, methacrylic acid, salts thereof and esters thereof. Non-limiting examples of acrylic adhesives are disclosed in US patent numbers 4,223,067 and 4,629,663.

Acrylics are often formulated as water based emulsions (*e.g.,* 30 to 60% by weight of acrylic polymer) with small amounts of surfactants to stabilize the mixture. Examples of commercially available water-based acrylic adhesives include 4224-NF (available from 3M, St. Paul, Minnesota, USA), JONBOND® 712, 745 and 746 acrylic emulsions (available from S.C. Johnson Polymers, Racine, Wisconsin, USA), and ROBOND™ PS 8915, PS 8120, PS 75R, PS 7742RG, L-37, L-100, L90D (available Rohm and Hass subsidiary of Dow Chemical).

### Cover

### Second Layer

The cleaning article 10 herein may comprise an additional layer 30. The second layer 30 may comprise a foam, a film, a synthetic nonwoven, a cellulosic sheet, sustainable sheets and combinations thereof. Plural layers may comprise one or more of these materials and laminates thereof, including the same and/or different materials.

If the additional layer comprises a foam, the foam layer may comprise a foam selected from the group consisting of polyurethane foams; polypropylene foams; polyethylene foams; cellulose foam sponges; naturally occurring sponges; open-cell polyester foams; cross-linked polyethylene foams; and combinations thereof.

If the additional layer comprises a film, the film layer may comprise a polyolefinic sheet. The sheet may comprise polyethylene terephthalate, polypropylene, polyethylene naphthalate, low-density polyethylene, high-density polyethylene, as are generally known in the art. The film layer may be smooth or textured, as described in commonly assigned US 4,846,821. A film layer may have a basis weight of about 15 to about 60 gsm and/or a thickness ranging from about 0.01 to about 3 mm.

A synthetic nonwoven layer may be carded, thermally bonded, spunbonded, hydroentagled, as are known in the art. The nonwoven layer may be of constant or variable basis weight and/or density. The nonwoven layer may be textured and/or comprise discrete apertures, as disclosed in commonly assigned US 6,936,330. The nonwoven layer may have a basis weight of from about 15 to about 120 gsm and/or a thickness ranging from about 0.01 to about 3 mm.

A cellulosic sheet may be wet laid and comprise permanent and/or temporary wet strength resins, as are known in the art. The cellulosic sheet may comprise kraft grade or tissue grade paper. The cellulosic sheet may be of constant or variable basis weight and/or density, as disclosed in U.S. Patent No. 5,277,761 or in U.S. Patent No. 4,637,859. A tissue grade cellulosic sheet may have a basis weight of from about 15 to about 45 gsm and/or a thickness ranging from about 0.01 to about 3 mm.

If desired, the one or more of the layers may be made of sustainable materials and/or combinations and blends of sustainable and other materials, including polymers derived from biorenewable materials. Sustainable materials may include polylactic acid (PLA), polyglycolic acid (PGA), polybutylene succinate (PBS), an aliphatic-aromatic copolyester optionally with high terephthalic acid content, an aromatic copolyester optionally with high terephthalic acid content, polyhydroxyalkanoate (PHA), thermoplastic starch (TPS) and mixtures thereof. Non-limiting examples of suitable materials are disclosed in assigned U.S. 8,083,064.

If desired, the layer may comprise a laminate of two or more materials. For example, the second layer 30 may comprise a layer of polyolefinic film. This layer may be reinforced with a woven layer or yarn layer attached thereto. A woven layer may comprise a loose weave, providing loop material suitable for attachment to a hook surface. A yarn layer may comprise plural parallel or randomly laid yards, also providing loop material suitable for attachment to a hook surface. The woven and/or yarn layers may be thermally bonded to the second layer 30.

In a non-limiting example, the second layer 30 may comprise any sheet which is flexible, impermeable to fluid and, in one embodiment, hydrophobic. As used herein, the term "impermeable" means that the material resists and, in some embodiments, prevents diffusion of moisture therethrough.

The thickness of the second layer 30, if any, is preferably up to about 30 mm, preferably from about 0.5 mm to about 20 mm, more preferably from about 1 mm to about 15 mm, even more preferably from about 2 mm to about 10 mm, and most preferably from about 4 mm to about 8 mm. In a non-limiting example, cleaning article 10 comprises a second layer 30 having a thickness of from about 7 mm to about 100 mm, more preferably from about 15 mm to about 25 mm.

The total volume of said second layer 30 may be from about 10 cm³ to about 100 cm³, more preferably from about 20 cm³ to about 70 cm³, even more preferably from about 30 cm³ to about 60 cm³, and most preferably from about 40 cm³ to about 50 cm³.

### Benefit agent

The cleaning article 10 may comprise a benefit agent. In a non-limiting example, the benefit agent may be impregnated in the sheets of melamine-formaldehyde foam 20. In another non-limiting example, the benefit agent is embedded in the second layer 30. In yet another non-limiting example, the benefit agent is impregnated in the attachment means, as discussed above, that attaches the sheets of melamine-formaldehyde foam layer 20 to the second layer 30. It will be understood, however, that in still further embodiment that the benefit agent can be located in any or all of the sheets of melamine-formaldehyde foam layer 20, second layer 30 or attachment means, as generally known to one skilled in the art. Suitable benefit agents may be selected from the group consisting of surfactants; dyes; inks; pigments; scents; acids; bases; oils; salts; bleach; antimicrobial agents; fragrances; solvents; biocides; hydrophobicizing agents; hydrophilizing agents; enzymes; influencing haptics; agents influencing the soil release behavior; formaldehyde scavengers; inorganic abrasives; organic abrasives; and mixtures thereof. In a non-limiting example, the benefit agent may have an HLB greater than about 5, alternatively greater than about 8 to about 14, alternatively greater than about 12. In another non-limiting example, the benefit agent may be present in free form in an amount from about 5% to about 20%, or from about 10% to about 15% by weight of the benefit agent. A benefit agent in free form means that the benefit agent is supplied to the cleaning article in its neat form whose release from the cleaning article is not purposefully controlled, delayed, or sustained. The benefit agent(s) may be supplied to the cleaning article in forms generally known to one skilled in the art such that the release from the cleaning article is purposefully controlled, delayed, or sustained.

Surfactants that are suitable for the present invention can be nonionic, anionic, cationic, amphoteric and/or a zwitterionic surfactant. Suitable nonionic surfactants may include alkoxylated fatty alcohol having the formula of RO(EO)e(PO)pH, where R is a hydrocarbon chain of from 2 to 24 carbon atoms, EO is ethylene oxide and PO is propylene oxide, e and p respectively representing the average degree of ethoxylation and propoxylation, are independently from 0 to 24, or R is a straight alkyl chain having from 6 to 22 carbon atoms, e is 5-12 and p is 0 (e.g. Lutensol™). Suitable cationic surfactants may include derivatives of quaternary ammonium, phosphonium, imidazolium and sulfonium compounds. Preferred cationic surfactants herein are trimethyl quaternary ammonium compounds. Suitable amphoteric surfactants may include amine oxides, betaine or ammonium sulfate or ammonium carboxylate, having the following formula R₁R₂R₃NO, R₁R₂R₃NR₄SO₄ or R₁R₂R₃NR₄CO₂ wherein each of R₁, R₂ and R₃ is independently a saturated substituted or unsubstituted, linear or branched alkyl groups of from 1 to 30, or from 8 to 18 carbon atoms, except for R₄ which preferably contain 3 saturated carbons. Preferred amine oxides herein are for instance natural blend C₈-C₁₀ amine oxides, and C₂-C₁₆ amine oxides, such as cetyl dimethyl amine oxide. Preferred betaine herein is cocamidopropyl betaine and lauramidopropyl betaine. Suitable anionic surfactants may include alkyl diphenyl ether sulphonate and alkyl carboxylate. Other suitable anionic surfactants may include water soluble salts or acids of the formula ROSO₃M wherein R is preferably a C₁₀-C₂₄ hydrocarbyl, or C₁₂-C₁₈ alkyl or hydroxyalkyl, and M is H or a cation, such as sodium, potassium, lithium, or ammonium or substituted ammonium. Other suitable anionic surfactants may include soap salts, C₉-C₂₀ linear alkylbenzenesulfonates, C₈-C₂₂ primary or secondary alkylsulfonates, sulfonated polycarboxylic acids, C₈-C₂₄ alkylpolyglycolethersulfates (containing up to 10 moles of ethylene oxide); alkyl ester sulfonates, sulfates of alkylpolysaccharides, alkyl polyethoxy carboxylates, such as those of the formula RO(CH₂CH₂O)ₖCH₂COO⁻M⁺ wherein R is a C₈-C₂₂ alkyl, k is an integer from 0 to 10, and M is a soluble salt-forming cation. Resin acids and hydrogenated resin acids are also suitable. A variety of suitable surfactants is generally disclosed in U.S. Patent 3,929,678.

Bleaching agents herein may be selected from a hydrogen peroxide source, a preformed peroxycarboxylic acid, a hypohalite bleach source, and a mixture thereof. Hydrogen peroxide sources herein include persulfate, dipersulphate, persulfuric acid, percarbonate, perborate, metal peroxide, perphosphate, persilicate, urea peroxyhydrate and mixture thereofs. Preformed peroxycarboxylic acids herein include those containing one, two or more peroxy groups, and can be aliphatic or aromatic. When the organic percarboxylic acid is aliphatic, the unsubstituted acid suitably has the linear formula: HO-O-C(O)-(CH₂)ₙ-Y, wherein Y is H, CH₃, CH₂Cl, COOH or C(O)OOH; n is an integer of 1-20. Branched analogs are also acceptable. When the organic percarboxylic acid is aromatic, the unsubstituted acid suitably has formula: HO-O-C(O)-C₆H₄-Y wherein Y is hydrogen, alkyl, alkyhalogen, halogen, -COOH or -C(O)OOH. Monoperoxycarboxylic acids useful as oxygen bleach herein are further illustrated by alkyl percarboxylic acids and aryl percarboxylic acids such as peroxybenzoic acid and ring-substituted peroxybenzoic acids, e.g., peroxy-α-naphthoic acid; aliphatic, substituted aliphatic and arylalkyl monoperoxy acids such as peroxylauric acid, peroxystearic acid, and N,N-phthaloylaminoperoxycaproic acid (PAP); and 6-octylamino-6-oxo-peroxyhexanoic acid. Peracids can be used in acid form or any suitable salt with a bleach-stable cation. Suitable hypohalite bleaching agents herein include those that form positive halide ions and/or hypohalite ions, and bleaching agents that are organic based sources of halides, such as chloroisocyanurates. Suitable hypohalite bleaching agents herein include alkali metal and alkaline earth metal hypochlorite, hypobromite, hypoiodite, chlorinated trisodium phosphate dodecahydrate, potassium and sodium dichloroisocyanurates, potassium and sodium trichlorocyanurates, N-chloroimides, N-chloroamides, N-chloroamines and chlorohydantoins.

Limescale reducing agents herein include, but are not limited to, acids and chelating agents. Exemplary acids useful herein include hydrochloric acid, phosphoric acid, sulfuric acid, sulfamic acid, acetic acid, hydroxyacetic acid, citric acid, benzoic acid, tartaric acid, formic acid and mixtures thereof. A mixture of organic and inorganic acid is preferred. Chelating agents useful herein can include, but are not limited to, carboxylates, phosphates, phosphonates, polyfunctionally-substituted aromatic compounds, polyamines, biodegradable compounds, the alkali metal, ammonium or substituted ammonium salts or complexes of these chelating agents, and mixtures thereof. Further examples of suitable chelating agents and levels of use are described in U.S. Pat. Nos. 3,812,044; 4,704,233; 5,292,446; 5,445,747; 5,531,915; 5,545,352; 5,576,282; 5,641,739; 5,703,031; 5,705,464; 5,710,115; 5,710,115; 5,712,242; 5,721,205; 5,728,671; 5,747,440; 5,780,419; 5,879,409; 5,929,010; 5,929,018; 5,958,866; 5,965,514; 5,972,038; 6,172,021; and 6,503,876.

Biocide means any known ingredient having the ability of reducing or even eliminating by killing or removing the micro-organisms existing on a surface, such as those described in US 6,613,728. Biocide useful herein includes a quaternary surface active compound, a guanidine, an alcohol, a glycerol, a phenolic compound, a heavy metal salt, an inorganic and organic acid, a halogen, a halogen-containing compound, a dye, an essential oil, an oxidizing compound, an adsorbent, a fungicide, an algaecide and a mixture thereof. Exemplary quaternary surface active compounds include benzalkonium chloride, benzethonium chloride, cetyl pyridinium chloride, sodium tetradecyl sulfate, sichlorobenzalkonium chloride, methylbenzethonium chloride, cetyl dimethyl ethyl ammonium bromide. Exemplary guanidines include chlorohexidine hydrochloride, chlorohexidine gluconate, dodecylguanidine hydrochloride, polyhexmethylenebiguanidine hydrochloride, and 6-acetoxy-2,4-dimethylmetadioxane. Exemplary alcohols include methanol, ethanol, propanol, isopropanol, etc. Exemplary phenolic compounds include cresol, resolcinols and related compounds, phenol; substituted phenols--cresols, meta-cresylacetate, creosote, quaiacol, resorcinol, hexylresorcinol, pyrogallol, thymol, thymol iodide, picric acid, chlorinated phenols--dichlorophene, hexachlorophene, tars. Exemplary halogens and halogen-containing compounds include iodine and iodoform. Exemplary oxidizing agents include peroxide, sodium perporate, potassium permanganate, zinc permanganate, potassium chlorate. Exemplary heavy metal salts include mercuric chloride, miscellaneous ionizable mercuric salts, organic mercurials, silver nitrate, silver lactate, silver picrate, silver proteins, silver halides, zinc oxide, zinc stearate, copper sulfate and organic tin derivatives. Exemplary dyes include azo dyes, acridene dyes, fluorescein dyes, phenolphthalein dyes and triphenylmethane dyes. Exemplary inorganic and organic acids include hydrochloric acid, sulfuric acid, nitric acid, citric acid, sorbic acid, acetic acid, boric acid, formic acid, maleic acid, adipic acid, lactic acid, malic acid, malonic acid, glycolic acid, and mixtures thereof. Exemplary essential oils are thyme oil, clove oil, cinnamon oil, geranium oil, eucalyptus oil, peppermint oil, citronella oil, ajowan oil, mint oil or mixtures thereof. Other useful biocide herein includes furan derivatives, nitrofurantoin, sulfur, sulfur dioxide, ichthamol, chrysarobin, anthralin, betanaphthol, balsams, volatile oils, chlorophyl.

Biocides useful herein also include fungicides and algaecides which act against molds and mildew. Removal of algae and fungi from hard surfaces is difficult. Moreover, fungi and algae reappear promptly if not completely removed or inhibited. Suitable fungicides and algaecides include metal salts, such as zinc sulfate, zinc acetate, zinc bromide, zinc chloride, zinc iodide, zinc nitrate, zinc bromate and zinc chlorate, cooper halide, copper sulfate, organic tin derivatives, water-insoluble or partially water-soluble fungicides and algaecides, such as diiodomethyl p-tolyl sulfone, N-(trichloromethyl thio) phthalimide, N,N-dimethyl-N'-phenyl N'-(fluorodichloromethyl thio) sulphamide, 2-(thiocyanomethylthio) benzothiazole / methylene bis(thiocyanate), 3-iodo-2-propynyl butyl carbamate, etc., all available from ALDRICH chemical. Above biocides are optionally mixed with concentrated acids, such as acetic acid, formic, propionic, n-butanoic, n-pentanoic, trimethylacetic, n-hexanoic, lactic, methoxyacetic, cyanoacetic, chloroacetic, citric, partaric, etc.

The benefit agent may be a solvent having a good dissolving ability for greasy stains. Solvents useful herein include those which are at least partially water-miscible, such as alcohols, ethers, such as diethylene glycol diethylether, diethylene glycol dimethylether, propylene glycol dimethylether, propylene glycol monomethylether, propylene glycol monoethylether, propylene glycol monopropylether, propylene glycol monobutylether, ethylene glycol monobutylether, dipropylene glycol monomethylether, dipropylene glycol monopropyl ether, dipropylene glycol monobutyl ether, diethyleneglycol monobutylether, lower esters of monoalkylethers of ethylene glycol or propylene glycol, such as propylene glycol monomethyl ether acetate, N-methyl pyrolidone and tetrahydrofuran. Mixtures of several solvents can also be used.

Polymers useful herein include polyolefins, polyesters, polyvinyl chlorides, polyamides, mixtures thereof and copolymers thereof. Specific examples of useful polymers include but are not limited to polypropylene, polyethylene, polybutylene, polystyrene, polyethylene terephthalate, polyamide, polyacrylate, polyvinyl chloride, polyvinyl alcohol, ethylene vinyl acetate copolymers and mixtures thereof.

Useful solids include abrasive materials or fillers which may be inorganic or organic materials, e.g. sand, lime (CaCO₃), silicates with an average particle diameter (number-average) in the range from about 1 µm to about 1 mm, or colloidal silica, preferably inorganic material are selected from oxides, chlorides, sulfates, phosphates, carbonates of Mg, Mn, Ba, Ca, W, Zr, Ti, Si, Mo, in particular TiO₂, SiO₂, sand and Al₂O₃. Other suitable materials are insoluble sodium polymetaphosphate, hydrated alumina, dicalcium orthophosphate dihydrate, calcium pyrophosphate, tricalcium phosphate, calcium polymetaphosphate. Other abrasive material may be Carbon based materials : i.e.: as refered as black carbon, activated carbon, charcoal, etc. and may be porous or not. Other abrasive material include microspheres. Particularly preferred inorganic fillers are selected from zeolite based materials and silica based materials. SiO₂ exists in a variety of crystalline forms and amorphous modifications, any of which are suitable for use herein. In particular, silicas having a high surface area or in agglomerated forms are preferred (i.e., clays or shells). Without being restrictive to a family of silica based materials, commonly silica which is in a highly purified form such that is contains at least about 90%, preferably about 95%, more preferably about 99% silicon dioxide (i.e.: a silica gel having a about 100% silica content, and fumed silica) is preferred. Alternatively, silica based materials may be provided from other sources such as metal silicates including sodium silicate. Further suitable materials are water-insoluble sodium polymetaphosphate, hydrated alumina, dicalcium orthophosphate dihydrate, calcium pyrophosphate, tricalcium phosphate, calcium polymetaphosphate.

Colorants useful herein include as dyes, pigments and mixtures thereof.

### Method of Making

- Use Tooker '318 & Minami '389. Generic.

### Packaging

The cleaning article 10 herein may be packaged for ease of delivery and sale. Packaging the cleaning article 10 may reduce the propensity of the cleaning article 10 from being dirtied or affected. The cleaning article 10 may be packaged by any suitable packing known to package cleaning articles. Non-limiting examples of suitable packaging may be selected from the group consisting of: paper bags, plastic bags, cartons, carton boxes, flow wraps, plastic wraps, and paper wraps, and the like and combinations thereof.

The packaging means herein may be printed and/or modified. In particular, such printing and/or other modification may be used to associate a brand-name and/or logo of a hard surface cleaner with the cleaning article 10.

### Method of cleaning a hard surface

The present disclosure further encompasses methods of cleaning a hard surface with the cleaning article 10 as described herein above. The method of cleaning a hard surface may comprise the steps of a) providing a cleaning article 10 comprising at least two sheets 20 removably attached to the cleaning article 10 as described herein above; b) removing one of the at least two sheets 20 from the cleaning article 10; and bringing the sheet 20 removed in step b) into contact with the hard surface. By "cleaning" it is meant herein removing, or at least partially removing, spots and/or stains from hard surfaces.

The method of cleaning a hard surface according may additionally comprise the step of wetting the sheet 20 with an appropriate solvent prior to bringing the sheet 20 into contact with the hard surface. A non-limiting example of an appropriate solvent may be tap water. A further non-limiting example of an appropriate solvent may be water in combination with a detergent composition.

### TEST METHODS

### Cleaning Product Sample Preparation Method

Test samples are prepared as follows. A flexible unitary cover of carton board is provided. The cover is designated into a front panel, a back panel, and a spine panel, as described by the present disclosure, wherein the front panel and back panel are of equal length of no less than about 120 mm and no greater than about 180 mm and of equal width of no less than about 70 mm and no greater than about 130 mm. The spine panel is of a length of no less than about 120 mm and no greater than about 180 mm and a width of no less than about 10 mm and no greater than about 40 mm. A hot melt adhesive is applied robotically to the spine panel in a pre-determined amount and pattern as described by the present disclosure. A stack of ten (10) cuboid sheets of white melamine-formaldehyde foam prepared as described by the present disclosure are provided. Each of the ten (10) sheets is of a length of no less than about 120 mm and no greater than about 180 mm and a width of no less than about 70 mm and no greater than about 130 mm to ensure the sheet can be readily pulled from the cover. Each of the ten (10) sheets has a sheet attachment side length of no less than about 70 mm and no greater than about 130 mm and a sheet attachment side width of no less than about 1 mm and no greater than about 4 mm. The stack of ten (10) sheets is then attached robotically to the spine section to form a unitary booklet cleaning product as described by the present disclosure. The cleaning product as formed is in the form of a booklet.

### Hand Removal of Sheets Test Method and Calculation of Average Area of Sheet Samples After Hand Removal

The cleaning product in the form of a booklet as prepared according to the Cleaning Product Sample Preparation Method described herein above is provided. A user holds the booklet in one hand while simultaneously opening the booklet by gripping the front cover panel with the thumb and pointer finger of their other hand and folding the panel in a horizontal direction moving away from the sheets, until the front panel is folded far back enough as to fully expose the top surface of the first sheet of the stack of ten (10) sheets. While continuing to grip the booklet with one hand, the user then releases their grip of the front panel and places their thumb on the top surface of the first sheet and slides their pointer finger underneath the first sheet along the side of the sheet distal to the spine to separate the first sheet from the remaining nine (9) sheets of the stack. Such separating of the sheet from the remaining sheets of the stack is shown in FIG. XX. The user then pulls the first sheet in a horizontal direction moving away from the spine until the sheet is completely separated from the booklet.

The sheet is then placed on a black flat background along with an X-Rite ColorChecker Passport photographic standard (made commercially available by X-Rite, Grand Rapids, Michigan, USA) alongside the sheet. An image of the sheet is taken using a digital camera, such as digital cameras manufactured by Polaroid. The camera exposure is such that the sheet is near the top of the dynamic range but not overexposed. The image is then uploaded to image analysis program such as MATLAB (made commercially available by MathWorks, Natick, Massachusetts, USA). Using the image analysis program, the image intensity is corrected such that the white chip on the X-Rite Color Checker Passport chart is set to "225" for the image. The image is then converted to grayscale and then thresholded such that a binary image is created. The binary image is then filled to remove any holes due to ink marks or noise. The area and perimeter of the largest white object in the image are computed to pixels. A spatial calibration factor is computed by dividing the horizontal field of view in millimeters by the number of pixels across the image. The area in square millimeters is computed by multiplying the area in pixels by the spatial calibration factor squared. The perimeter is computed by multiplying the perimeter in pixels by the calibration factor.

The test method is repeated nine (9) more times, once per each discrete sheet in the booklet, for a total of ten (10) sheet sample area calculations in square millimeters. The resulting area in square millimeters for each of the ten (10) sheet samples for one booklet is then averaged by calculating the sum of the ten (10) sheet sample areas in square millimeters, then dividing by ten (10), and rounding to two (2) decimal places.

### EXAMPLES

### Example 1: Average Area of Sheet Samples after Hand Removal from Booklets of Varying Adhesive Patterns

A total of twenty-two (22) cleaning articles formed as booklets, each booklet having ten (10) sheets of white melamine-formaldehyde foam were prepared according to the Cleaning Product Sample Preparation Method as described herein. The sample size of each sample sheet was approximately about 90 mm x about 150 mm and the sheet attachment side length was about 150 mm and the sheet attachment side width was about 1 mm thick. Each strip of hot melt adhesive was applied robotically as a linear strip spanning the entire width of the spine panel but was discontinuous along the length of the spine panel. For each booklet sample having a linear strip of hot adhesive melt, the linear strips were placed at regular intervals along the length of the spine panel.

The removal of each individual sample sheet for each respective booklet sample was then performed according to the Hand Removal of Sheets Test Method as described above. The digital camera used was a Polaroid Model No. CIA-00534C. The imagine analysis software used was MATLAB Image Toolbox (made commercially available by MathWorks, Natick, Massachusetts, USA). The average area of sheet samples per each respective booklet cleaning product sample was then calculated per the Calculation of Average Area of Sheet Samples After Hand Removal described above.

The number of linear strips of hot melt adhesive and the corresponding average area of sheet samples after hand removal per each booklet sample is shown below in Table 1.

**Table 1. Booklet Cleaning Product Samples**

| **Booklet Cleaning Product Sample** | **Number of Linear Strips of Hot Melt Adhesive** | **Average Area of Sheet Samples after Hand Removal (mm²)** |
|---|---|---|
| A | 1 | 13970.65 |
| B | 1 | 13843.68 |
| C | 1 | 13766.06 |
| D | 2 | 14026.58 |
| E | 2 | 13669.31 |
| F | 2 | 13830.10 |
| G | 2 | 13924.25 |
| H | 2 | 13745.30 |
| I | 2 | 13707.83 |
| J | 3 | 13803.92 |
| K | 3 | 13714.56 |
| L | 3 | 13663.46 |
| M | 4 | 13777.20 |
| N | 4 | 13625.37 |
| O | 4 | 13552.75 |
| P | 6 | 13801.77 |
| Q | 6 | 13738.82 |
| R | 6 | 13497.03 |
| S | 8 | 13827.40 |
| T | 8 | 13641.51 |
| U | 8 | 13555.10 |
| V | Full | 12398.97 |

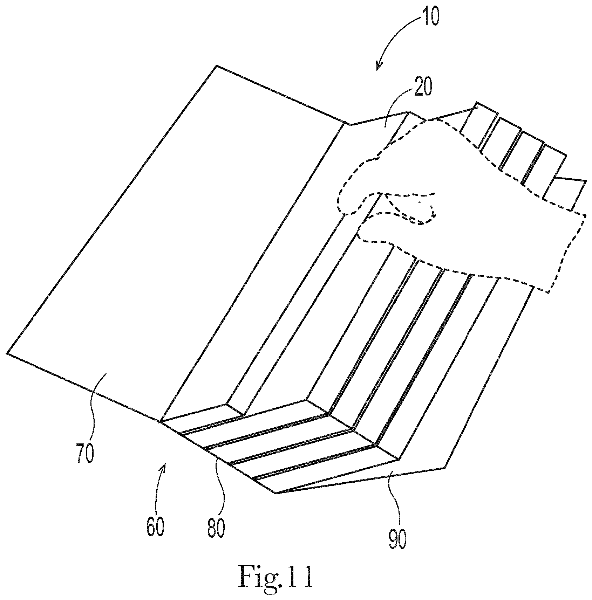

A corresponding graph of the average area of sheet samples after hand removal (mm²) per each of booklet sample is shown in FIG. 11. As is shown by the graph, as the number of linear strips of adhesive increases, the average area of sheet samples after hand removal generally decreases, but does not see a sharp decrease. However, when the hot melt adhesive is applied continuously along the length of the spine panel and thus is continuous along the length of the sheet attachment side of the sheet attached to the spine panel, the average area of sheet samples after hand removal sees a sharp decrease. Booklet samples A-U, each having 1, 2, 3, 4, 6, or 8, linear strips of hot melt adhesive applied along the width of the spine at regularly spaced intervals, demonstrate that cleaning articles having hot melt adhesive that is discontinuous along the length of the sheet attachment side may be acceptable to consumers as not having lost as much of the sheet when removing the sheet from the booklet. In contrast, booklet sample V, having hot melt adhesive that is continuous along the length of the spine and thus continuous along the length of the sheet attachment side of the sheet attached to the spine panel, may not be acceptable to consumers as having lost too much of the sheet when removing the sheet from the booklet.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A cleaning article (10) comprising:
at least two sheets (20), each of the at least two sheets comprising a first layer (25) comprising a melamine-formaldehyde foam, wherein each of the at least two sheets comprises at least five sheet sides, each of the at least five sheet sides having a length and a width, wherein at least one of the at least five sheet sides is a sheet attachment side; **characterized in that** the cleaning article further comprises an adhesive (50);
wherein the adhesive is in contact with the sheet attachment side of each of the at least two sheets such that each of the at least two sheets is removably attached to the cleaning article by the adhesive and wherein the adhesive is discontinuous along the length of the sheet attachment side of each of the at least two sheets.

2. The cleaning article according to claim 1, wherein the cleaning article further comprises a cover comprising a spine panel, wherein at least a portion of the spine panel is in contact with the adhesive and is joined by the adhesive to the at least two sheets at the sheet attachment side of each of the at least two sheets.

3. The cleaning article according to any preceding claim, wherein the cover further comprises a back panel fixedly attached to and extending outwardly from the spine panel, wherein the back panel is substantially free of adhesive and wherein the back panel partially or wholly obscures at least a portion of a side of at least one of the two sheets.

4. The cleaning article according to any preceding claim, wherein the at least two sheets are arranged in a stack such that each of the sheet attachment sides of the at least two sheets are aligned and facing in the same direction, the stack having a length parallel to the length of the sheet attachment side and a width parallel to the width of the sheet attachment side, wherein the adhesive is discontinuous along the length of the stack.

5. The cleaning article according to any preceding claim, wherein at least a portion of the adhesive is applied as one or more continuous adhesive strips transversely extending the width of the stack.

6. The cleaning article according to any preceding claim, wherein the adhesive is applied along the length of the sheet attachment side at regularly spaced intervals.

7. The cleaning article according to any preceding claim, wherein at least 10% of the sheet attachment side of each of the at least two sheets is free of adhesive.

8. The cleaning article according to any preceding claim, wherein each of the at least two sheets is cuboid in shape.

9. The cleaning article according to any preceding claim, wherein the length of the attachment side of each of the at least two sheets is from about 20 mm to about 200 mm.

10. The cleaning article according to any preceding claim, wherein each of the at least two sheets has a thickness of from about 0.5 mm to about 4 mm.

11. The cleaning article according to any preceding claim, wherein the cleaning article comprises at least 5 sheets.

12. The cleaning article according to any preceding claim, further comprising a second layer,
wherein the second layer is attached to the first layer of at least one of the at least two sheets.

13. The cleaning article according to any preceding claim, wherein the melamine-formaldehyde foam comprises a benefit agent selected from the group consisting of a detergent composition; surfactants; dyes; inks; pigments; scents; acids; bases; oils; salts; bleach; antimicrobial agents; fragrances; solvents; biocides; hydrophobicizing agents; hydrophilizing agents; enzymes; influencing haptics; agents influencing the soil release behavior; formaldehyde scavengers; inorganic abrasives; organic abrasives; and mixtures thereof.

14. A method of cleaning a hard surface comprising the steps of:
a) providing the cleaning article according to any preceding claim;
b) removing one of the at least two sheets from the cleaning article; and
c) bringing the sheet removed in step b) into contact with the hard surface.

15. The method of cleaning a hard surface according to claim 14 wherein the cleaning article further comprises a cover comprising a spine panel and a front panel fixedly attached to and extending outwardly from the spine panel, wherein the spine panel is in contact with the adhesive and is joined by the adhesive to at least two sheets at the sheet attachment side of each of the at least two sheets and wherein the front panel is substantially free of adhesive and the front panel partially or wholly obscures at least a portion of a side of at least one of the two sheets, wherein the method further comprises a step of opening the front panel to access any of the at least two cleaning articles before removing one of the at least two sheets from the cleaning article in step b).

## Patentansprüche

1. Reinigungsartikel (10), umfassend:
mindestens zwei Blätter (20), wobei jedes der mindestens zwei Blätter eine erste Schicht (25) umfasst, die einen Melamin-Formaldehyd-Schaumstoff umfasst, wobei jedes der mindestens zwei Blätter mindestens fünf Blattseiten umfasst, wobei jede der mindestens fünf Blattseiten eine Länge und eine Breite aufweist, wobei mindestens eine der mindestens fünf Blattseiten eine Blattbindungsseite ist; **dadurch gekennzeichnet, dass** der Reinigungsartikel ferner einen Klebstoff (50) umfasst;
wobei der Klebstoff in Kontakt mit der Blattbindungsseite jedes der mindestens zwei Blätter ist, so dass jedes der mindestens zwei Blätter durch den Klebstoff entfernbar an dem Reinigungsartikel angebracht ist, und wobei der Klebstoff entlang der Länge der Blattbindungsseite jedes der mindestens zwei Blätter diskontinuierlich ist.

2. Reinigungsartikel nach Anspruch 1, wobei der Reinigungsartikel ferner eine Abdeckung umfasst, die ein Rückenfeld umfasst, wobei mindestens ein Abschnitt des Rückenfelds mit dem Klebstoff in Kontakt steht und durch den Klebstoff mit den mindestens zwei Blättern an der Blattbindungsseite jedes der mindestens zwei Blätter verbunden ist.

3. Reinigungsartikel nach einem der vorstehenden Ansprüche, wobei die Abdeckung ferner eine Rückseite umfasst, die fest am Rückenfeld angebracht ist und sich von diesem nach außen erstreckt, wobei die Rückseite im Wesentlichen frei von Klebstoff ist und wobei die Rückseite mindestens einen Abschnitt einer Seite mindestens eines der zwei Blätter teilweise oder vollständig verdeckt.

4. Reinigungsartikel nach einem der vorstehenden Ansprüche, wobei die mindestens zwei Blätter in einem Stapel angeordnet sind, derart, dass jede der Blattbindungsseiten der mindestens zwei Blätter in die gleiche Richtung ausgerichtet ist und in diese weist, wobei der Stapel eine Länge parallel zur Länge der Blattbindungsseite und eine Breite parallel zur Breite der Blattbindungsseite aufweist, wobei der Klebstoff entlang der Länge des Stapels diskontinuierlich ist.

5. Reinigungsartikel nach einem der vorstehenden Ansprüche, wobei mindestens ein Teil des Klebstoffs als ein oder mehrere kontinuierliche Klebstoffstreifen aufgetragen ist, die sich quer über die Breite des Stapels erstrecken.

6. Reinigungsartikel nach einem der vorstehenden Ansprüche, wobei der Klebstoff entlang der Länge der Blattbindungsseite in regelmäßig beabstandeten Intervallen aufgetragen ist.

7. Reinigungsartikel nach einem der vorstehenden Ansprüche, wobei mindestens 10 % der Blattbindungsseite jedes der mindestens zwei Blätter frei von Klebstoff sind.

8. Reinigungsartikel nach einem der vorstehenden Ansprüche, wobei jedes der mindestens zwei Blätter quaderförmig ist.

9. Reinigungsartikel nach einem der vorstehenden Ansprüche, wobei die Länge der Bindungsseite jedes der mindestens zwei Blätter etwa 20 mm bis etwa 200 mm beträgt.

10. Reinigungsartikel nach einem der vorstehenden Ansprüche, wobei jedes der mindestens zwei Blätter eine Dicke von etwa 0,5 mm bis etwa 4 mm aufweist.

11. Reinigungsartikel nach einem der vorstehenden Ansprüche, wobei der Reinigungsartikel mindestens 5 Blätter umfasst.

12. Reinigungsartikel nach einem der vorstehenden Ansprüche, ferner umfassend eine zweite Schicht, wobei die zweite Schicht an der ersten Schicht von mindestens einem der mindestens zwei Blätter angebracht ist.

13. Reinigungsartikel nach einem der vorstehenden Ansprüche, wobei der Melamin-Formaldehyd-Schaumstoff einen Wirkstoff umfasst, der ausgewählt ist aus der Gruppe bestehend aus einer Waschmittelzusammensetzung; Tensiden; Farbstoffen; Tinten; Pigmenten; Düften; Säuren; Basen; Ölen; Salzen; Bleichmittel; antimikrobiellen Mitteln, Duftstoffen; Lösungsmitteln; Bioziden, Hydrophobierungsmitteln; Hydrophilierungsmitteln; Enzymen; beeinflussenden Haptiken; Mitteln, die das Schmutzabweiseverhalten beeinflussen;
Formaldehydfängern; anorganischen Schleifmitteln; organischen Schleifmitteln; und Mischungen davon.

14. Verfahren zum Reinigen harter Oberflächen, umfassend die Schritte:
(a) Bereitstellen des Reinigungsartikels nach einem der vorstehenden Ansprüche;
b) Entfernen eines der mindestens zwei Blätter von dem Reinigungsartikel; und
c) Inkontaktbringen des in Schritt b) entfernten Blatts mit der harten Oberfläche.

15. Verfahren zum Reinigen einer harten Oberfläche nach Anspruch 14, wobei der Reinigungsartikel ferner eine Abdeckung umfasst, die ein Rückenfeld und eine Vorderseite umfasst, die fest am Rückenfeld angebracht ist und sich von diesem nach außen erstreckt, wobei das Rückenfeld in Kontakt mit dem Klebstoff steht und durch den Klebstoff mit wenigstens zwei Blättern an der Blattbefestigungsseite jedes der wenigstens zwei Blätter verbunden ist und wobei die Vorderseite im Wesentlichen frei von Klebstoff ist und die Vorderseite wenigstens einen Abschnitt einer Seite wenigstens eines der zwei Blätter teilweise oder vollständig verdeckt, wobei das Verfahren ferner einen Schritt des Öffnens der Vorderseite umfasst, um auf einen beliebigen der mindestens zwei Reinigungsartikel zuzugreifen, bevor in Schritt b) eins der mindestens zwei Blätter von dem Reinigungsartikel entfernt wird.

## Revendications

1. Article de nettoyage (10) comprenant :
au moins deux feuilles (20), chacune des au moins deux feuilles comprenant une première couche (25) comprenant une mousse de mélamine-formaldéhyde, dans lequel chacune des au moins deux feuilles comprend au moins cinq côtés de feuille, chacun des au moins cinq côtés de feuille ayant une longueur et une largeur, dans lequel au moins l'un des au moins cinq côtés de feuille est un côté de fixation de feuille ; **caractérisé en ce que** l'article de nettoyage comprend en outre un adhésif (50) ;
dans lequel l'adhésif est en contact avec le côté de fixation de feuille de chacune des au moins deux feuilles de telle sorte que chacune des au moins deux feuilles est fixée de manière amovible à l'article de nettoyage par l'adhésif et dans lequel l'adhésif est discontinu sur la longueur du côté de fixation de feuille de chacune des au moins deux feuilles.

2. Article de nettoyage selon la revendication 1, dans lequel l'article de nettoyage comprend en outre une couverture comprenant un panneau d'ossature, dans lequel au moins une partie du panneau d'ossature est en contact avec l'adhésif et est jointe par l'adhésif aux au moins deux feuilles au niveau du côté de fixation de feuille de chacune des au moins deux feuilles.

3. Article de nettoyage selon une quelconque revendication précédente, dans lequel la couverture comprend en outre un panneau arrière fixé fixement au et s'étendant vers l'extérieur à partir du panneau d'ossature, dans lequel le panneau arrière est essentiellement dépourvu d'adhésif et dans lequel le panneau arrière occulte partiellement ou entièrement au moins une partie d'un côté d'au moins l'une des deux feuilles.

4. Article de nettoyage selon une quelconque revendication précédente, dans lequel les au moins deux feuilles sont agencées dans une pile de telle sorte que chacun des côtés de fixation de feuille des au moins deux feuilles est aligné et orienté dans la même direction, la pile ayant une longueur parallèle à la longueur du côté de fixation de feuille et une largeur parallèle à la largeur du côté de fixation de feuille, dans lequel l'adhésif est discontinu sur la longueur de la pile.

5. Article de nettoyage selon une quelconque revendication précédente, dans lequel au moins une partie de l'adhésif est appliquée sous forme d'une ou plusieurs bandes adhésives continues étendant transversalement la largeur de la pile.

6. Article de nettoyage selon une quelconque revendication précédente, dans lequel l'adhésif est appliqué sur la longueur du côté de fixation de feuille au niveau d'intervalles espacés régulièrement.

7. Article de nettoyage selon une quelconque revendication précédente, dans lequel au moins 10 % du côté de fixation de feuille de chacune des au moins deux feuilles est dépourvu d'adhésif.

8. Article de nettoyage selon une quelconque revendication précédente, dans lequel chacune des au moins deux feuilles est de forme parallélépipédique.

9. Article de nettoyage selon une quelconque revendication précédente, dans lequel la longueur du côté de fixation de chacune des au moins deux feuilles va d'environ 20 mm à environ 200 mm.

10. Article de nettoyage selon une quelconque revendication précédente, dans lequel chacune des au moins deux feuilles a une épaisseur allant d'environ 0,5 mm à environ 4 mm.

11. Article de nettoyage selon une quelconque revendication précédente, dans lequel l'article de nettoyage comprend au moins 5 feuilles.

12. Article de nettoyage selon une quelconque revendication précédente, comprenant en outre une deuxième couche, dans lequel la deuxième couche est fixée à la première couche d'au moins l'une des au moins deux feuilles.

13. Article de nettoyage selon une quelconque revendication précédente, dans lequel la mousse de mélamine-formaldéhyde comprend un agent bénéfique choisi dans le groupe constitué d'une composition détergente ; d'agents tensioactifs ; de teintures ; d'encres ; de pigments ; de senteurs ; d'acides ; de bases ; d'huiles ; de sels ; d'agent de blanchiment ; d'agents antimicrobiens ; de parfums ; de solvants ; de biocides ; d'agents d'hydrophobie ; d'agents d'hydrophilisation ; d'enzymes ; d'agents influençant l'haptique ; d'agents influençant le comportement antisalissure ; de piégeurs de formaldéhyde ; d'abrasifs inorganiques ; d'abrasifs organiques ; et de leurs mélanges.

14. Procédé de nettoyage d'une surface dure comprenant les étapes consistant à :
a) fournir l'article de nettoyage selon une quelconque revendication précédente ;
b) retirer l'une des au moins deux feuilles de l'article de nettoyage ; et
c) amener la feuille retirée à l'étape b) en contact avec la surface dure.

15. Procédé de nettoyage d'une surface dure selon la revendication 14 dans lequel l'article de nettoyage comprend en outre une couverture comprenant un panneau d'ossature et un panneau avant fixé fixement au et s'étendant vers l'extérieur à partir du panneau d'ossature, dans lequel le panneau d'ossature est en contact avec l'adhésif et est joint par l'adhésif à au moins deux feuilles au niveau du côté de fixation de feuille de chacune des au moins deux feuilles et dans lequel le panneau avant est essentiellement dépourvu d'adhésif et le panneau avant occulte partiellement ou entièrement au moins une partie d'un côté d'au moins l'une des deux feuilles, dans lequel le procédé comprend en outre une étape consistant à ouvrir le panneau avant pour accéder à n'importe lequel des au moins deux articles de nettoyage avant de retirer l'une des au moins deux feuilles de l'article de nettoyage à l'étape b).
